# EUROPÄISCHE PATENTSCHRIFT

(11) **EP 1 731 394 B1**
(45) Veröffentlichungstag und Bekanntmachung des Hinweises auf die Patenterteilung: **07.01.2009**
(21) Anmeldenummer: 06010659.8
(22) Anmeldetag: 24.05.2006
(51) Int. Cl.: B60T 17/00, B60T 15/04

(54) **Druckluftversorgungseinrichtung**
Air pressure supply system
Installation d'alimentation en air comprimé

(30) Priorität: 08.06.2005 DE 102005026342
(43) Veröffentlichungstag der Anmeldung: 13.12.2006
(73) Patentinhaber: KNORR-BREMSE SYSTEME FÜR NUTZFAHRZEUGE GMBH, 80809 München (DE)
(72) Erfinder: Battistella, Denis, 20037 Paderno Dugnano, Milano (IT); Herges, Michael, 70825 Korntal-Münchingen (DE); Fonseca, Braulio, 85391 Allershausen (DE); Hilberer, Eduard, 68766 Hockenheim (DE)
(74) Vertreter: Schönmann, Kurt

(56) Entgegenhaltungen:
- EP-A- 1 529 705
- DE-A1- 10 342 978
- DE-C1- 19 638 226

## Beschreibung

Die Erfindung betrifft eine Druckluftversorgungseinrichtung mit einer elektronischen Luftaufbereitungsanlage, die ein Ventilgehäuse aufweist.

Luftaufbereitungsanlagen dienen dazu, dem Bremssystem und sonstigen Druckluftverbrauchern von Nutzkraftfahrzeugen aufbereitete, das heißt insbesondere getrocknete, Druckluft zuzuführen. Die Trocknung der von einem Kompressor gelieferten Druckluft erfolgt in einer Trocknereinheit, die an der Oberseite eines Ventilgehäuses angeordnet ist. Das Ventilgehäuse beherbergt Komponenten, die für die Druckluftversorgung wesentlich sind, beispielsweise einen Druckregler, eine Mehrkreisschutzventilanordnung und eine elektronische Steuereinheit.

Es sind solche Luftaufbereitungsanlagen bekannt, deren wesentliche Aufgabe, neben der Trocknung und Reinigung der Luft, darin besteht, das Bremssystem eines Nutzkraftfahrzeugs mit Druckluft zu versorgen. Neben dem Bremssystem sind in Nutzkraftfahrzeugen aber im Allgemeinen auch weitere Druckluftverbraucher vorgesehen, beispielsweise eine Luftfederung. Das Bremssystem selbst gliedert sich in zahlreiche Komponenten, beispielsweise unterteilt auf Zugfahrzeug und Anhänger sowie die Feststellbremsen. Da bei der Druckluftversorgung verschiedener Verbraucher vergleichbare Aufgaben zu lösen sind, liegt ein allgemeines Bestreben dahingehend vor, die zur Lösung der Aufgaben verwendeten Komponenten weitgehend zu integrieren. Dem gegenüber ist man aber auch bestrebt, die Druckluftversorgungseinrichtungen für Nutzkraftfahrzeuge bezüglich ihrer Baugröße zu begrenzen, insbesondere, um bei üblicher Anordnung der Druckluftversorgungseinrichtung eine ausreichende Bodenfreiheit des Nutzkraftfahrzeugs sicherzustellen. Dies wird dadurch erschwert, dass sich die Bauhöhen von Ventilgehäuse und Trocknereinheit addieren, da die Trocknereinheit üblicherweise auf der Oberseite der Luftaufbreitungsanlage angeordnet ist.

Bei Nutzfahrzeugen mit einem Betriebsbremsanlagendruck oberhalb 8,5 bar ist eine Druckbegrenzung der Versorgung der Anhängerbremsanlage und der Feststellbremsanlage erforderlich. Drücke oberhalb von 8,5 bar sind bei EBS-Fahrzeugen heutiger Generation üblich. Bei bekannten Lösungen werden alle Kreise aus einer Zentralleitung mit gleichem Druckniveau versorgt, und der Druck zur Versorgung der Feststellbremsanlage wird mit Hilfe von Wegeventilen, welche mit Magnetventilen vorgesteuert sind, eingestellt. Im Rahmen einer solchen Lösung kann es aufgrund des Fehlens pneumatischer Druckbegrenzungsventile zu Druckspitzen im Bereich der Feststellbremsanlage kommen.

Weitere Randbedingungen sind zu beachten. Beispielsweise darf sich bei Stromausfall die Stellung der Feststellbremsanlage nicht verändern. Es ist außerdem erforderlich, eine Steuerung der Feststellbremsanlage des Anhängers zur Verfügung zu stellen.

Der Erfindung liegt die Aufgabe zugrunde, eine Druckluftversorgungseinrichtung zur Verfügung zu stellen, die ein hohes Maß an Integration realisiert, die sich in bequemer Weise warten lässt, die überhöhte Druckspitzen im Bereich der Feststellbremsanlage vermeidet und durch die die gesetzlichen Vorschriften durch rationelle Maßnahmen beachtet werden.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung baut auf einer gattungsgemäßen Druckluftversorgungseinrichtung dadurch auf, dass an dem Ventilgehäuse ein Feststellbremsanlagenmodul zur Druckluftversorgung einer Feststellbremsanlage über eine Flanschverbindung angeordnet ist, dass die Flanschverbindung eine elektrische und eine pneumatische Schnittstelle zwischen der Luftaufbereitungsanlage und dem Feststellbremsanlagenmodul zur Verfügung stellt und dass in dem Ventilgehäuse ein Druckbegrenzer angeordnet ist, der einen einer Anhängerdruckluftversorgung und der Feststellbremsanlage zugeführten Druck begrenzt. Die Flanschverbindung, die aus Gründen der zur Verfügung stehenden Bauhöhe vorzugsweise seitlich an der Ventileinrichtung der Luftaufbereitungsanlage angeordnet ist, stellt eine elektrische und eine pneumatische Schnittstelle zur Verfügung, so dass die Verbindung zwischen dem Luftfederungsmodul und der Luftaufbereitungsanlage in einfacher Weise hergestellt und gelöst werden kann. Dies ermöglicht auch eine Reparatur beziehungsweise Wartung der Anlage im Feld. Ein einziger Druckbegrenzer reicht somit aus, um sowohl der Druck in der Anhängerbremsanlage als auch der Feststellbremsanlage zu begrenzen. Außerdem werden, anders als Systeme, die sich zur Steuerung des Feststellbremsanlagendruckes Wegeventilen bedienen, unerwünscht hohe Druckspitzen vermieden.

Nützlicherweise ist vorgesehen, dass in dem Feststellbremsanlagenmodul ein Relaisventil angeordnet ist, über das der der Feststellbremsanlage zugeführte Druck steuerbar ist. Die Anordnung eines Relaisventils im Feststellbremsanlagenmodul erlaubt einen ausreichenden Druckluftdurchsatz für den Betrieb der Feststellbremsanlage und sonstiger Funktionen, die mit Hilfe desselben Druckluftpfades ausgeführt werden.

In diesem Zusammenhang ist es von Vorteil, dass der Steuereingang des Relaiventils über ein bistabiles Magnetventil ansteuerbar ist, welches bei einem Stromausfall in seiner Stellung verharrt. Ein solches bistabiles Magnetventil, insbesondere mit einem Permanentmagneten, welches bei einem Stromausfall seine Stellung nicht ändert, dient zur Beachtung der allgemeinen Regel, im Falle eines Stromausfalls sicherzustellen, dass sich die Stellung der Feststellbremsanlage nicht verändert. Ein derartiger Verriegelungseffekt (Letch-Effekt) kann alternativ oder zusätzlich durch mechanische Mittel zur Verfügung gestellt werden.

Es ist vorgesehen, dass das bistabile Magnetventil durch Stromrichtungsänderung in der Magnetspule umschaltet. Eine solche Stromrichtungsänderung durch das bistabile Magnetventil kann durch eine sogenannte Vollbrücke bereitgestellt werden, die Transistorstufen, sogenannte "H-Side-Treiber" und "L-Side-Treiber", enthält.

Nützlicherweise kann vorgesehen sein, dass das bistabile Magnetventil durch einen Stromimpuls in der Magnetspule umschaltet.

Die Erfindung ist in besonders vorteilhafter Weise dadurch weitergebildet, dass das bistabile Magnetventil in Serie mit einem Haltemagnetventil geschaltet ist. Ein solches Haltemagnetventil, das im stromlosen Zustand durch Federkraft in seine geöffnete Grundstellung überführt wird, kann bei Bestromung dafür sorgen, dass der Ausgangsdruck am Relaisventil konstant gehalten wird.

Weiterhin kann nützlich sein, dass einem Ausgang des Relaisventils ein 3/2-Ventil nachgeschaltet ist, über das ein Steuereingang eines Anhängersteuermoduls ansteuerbar ist. Über dieses zusätzliche Magnetventil kann insbesondere der Steuereingang eines Anhängersteuermoduls angesteuert werden. Auf diese Weise kann eine Kontrollstellung realisiert werden, da ein von der Feststellbremsanlage des Zugfahrzeugs unabhängiges Be- und Entlüften des Anhängersteuerventils ermöglicht wird.

Weiterhin ist es von Vorteil, dass ein 3/2-Magnetventil vorgesehen ist, dass nicht aus dem Feststellbremsanlagenkreis mit Druckluft versorgt wird und dass bei Bestromung eine Notlöseeinrichtung der Feststellbremsanlage betätigt. Insbesondere bei einem Kreisdefekt im Bereich des Feststellbremsanlagenkreises soll es möglich sein, die Feststellbremsanlage zu öffnen. Dies ist insbesondere im Hinblick auf die Personenbeförderung in Bussen erforderlich, um auf diese Weise einen Bus unter allen Umständen aus einer Gefahrenzone entfernen zu können.

Es kann besonders nützlich sein, dass in dem Ventilgehäuse der Luftaufbereitungsanlage eine elektronische Steuerung vorgesehen ist, die Steuerfunktionen für die Luftaufbereitungsanlage und für das Feststellbremsanlagenmodul wahrnimmt. Hierdurch gelingt es, die elektronische Steuerung des Moduls einfach zu gestalten oder ganz auf sie zu verzichten. Die elektronische Steuerung der Luftaufbereitungsanlage ist in der Lage, diese Steuerungsaufgaben des Moduls zu übernehmen. Steuersignale beziehungsweise von einer Sensorik des Moduls erfasste Signale werden über die elektrische Schnittstelle übermittelt. Über pneumatische Verbindungen der pneumatischen Schnittstelle kann Druckluft zu Steuerzwecken und zur Lieferung an Verbraucher überströmen.

Nützlich ist aber auch, dass in dem Feststellbremsanlagenmodul eine elektronische Steuerung vorgesehen ist, die Steuerfunktionen für das Luftfederungsmodul wahrnimmt. Insbesondere für Steuerfunktionen, die nicht ohne weiteres in die Elektronik der Luftaufbereitungsanlage implementiert werden können, beziehungsweise für solche, die nützlicherweise redundant ausgeführt werden, ist es sinnvoll, das Modul selbst mit einer elektronischen Steuerung auszustatten.

In Weiterbildung dieses Gedankens, kann dann nützlicherweise vorgesehen sein, dass in dem Feststellbremsanlagenmodul eine elektronische Steuerung vorgesehen ist, die Steuerfunktionen der elektronischen Steuerung für die Luftaufbereitungsanlage ergänzt und/oder ersetzt. Auf dieser Grundlage können sich elektronische Steuerungen der einzelnen Einheiten ergänzen, ersetzen und/oder überwachen.

In vorteilhafter Weise ist vorgesehen, dass im Bereich der Flanschverbindung mechanische Mittel vorgesehen sind, die die Verbindung zwischen dem Ventilgehäuse der Luftaufbereitungsanlage und dem Modul örtlich festlegen. Die mechanischen Verbindungen, beispielsweise Passstifte und entsprechende Führungen für diese, stellen sicher, dass die pneumatischen Verbindungen im Bereich der Schnittstelle nach außen zuverlässig abdichten und dass die elektrischen Steckverbindungen nicht in unzulässiger Weise mechanisch belastet werden.

Weiterhin kann nützlich sein, dass die Flanschverbindung direkt zwischen dem Ventilgehäuse und dem Luftfederungsmodul vorliegt, das heißt insbesondere ohne Zwischenplatte. Derartige Zwischenplatten zum Verbinden von Modulen sind bekannt. Sie dienen insbesondere dazu, durch geeignete Bohrungen und Kanäle die Strömungswege der Druckluft zwischen den Einheiten zu definieren. Beispielsweise kann man so durch den Einsatz unterschiedlicher Zwischenplatten unterschiedliche pneumatische Wege freigeben beziehungsweise sperren. Im Zusammenhang mit der vorliegenden Erfindung und insbesondere im Hinblick auf die Wartungsfreundlichkeit wird auf eine solche Zwischenplatte verzichtet. Vielmehr werden die Einheiten, das heißt Luftaufbereitungsanlage und Module direkt mit den Bohrungen und Kanälen ausgestattet, die die geeigneten Verbindungen zur Verfügung stellen.

Der Erfindung liegt die Erkenntnis zugrunde, dass es gelingt, durch das spezielle Integrationskonzept von Feststellbremsanlagenmodul, auch als EPBC-Modul ("electronic park brake control") bezeichnet, und Luftaufbereitungsanlage eine vielseitige Druckluftversorgungseinrichtung zur Verfügung zu stellen, die sich im Hinblick auf ihre Baugröße und Bauform als praktisch erweist und die Grundlage für die Integration zahlreicher Möglichkeiten schafft. Im Hinblick auf die Integrationsfähigkeit ist beispielsweise noch zu erwähnen, dass Anschlüsse der Druckluftversorgungseinrichtung gemeinsam von allen Einheiten genutzt werden können, beispielsweise um bestimmte Spannungen an hierfür vorgesehen Klemmen anzulegen. Auch können bestimmte elektrische Baugruppen gemeinsam genutzt werden, beispielsweise im Hinblick auf die "on-bord"-Diagnose mit Hilfe des CAN-Busses und die "off-bord"-Diagnose sowie zur seriellen Kommunikation. Es lassen sich gemeinsame Netzteile zur Versorgung der Mikrocontroller und/oder der Drucksensoren vorsehen. Weiterhin ist eine gemeinsame Schutzbeschaltung der Anschlüsse des Zentralversorgungssteckers möglich.

Die Erfindung wird nun mit Bezug auf die begleitenden Zeichnungen anhand besonders bevorzugter Ausführungsformen beispielhaft erläutert.

Es zeigen:
- Figur 1: ein Schaltungsdiagramm zur Erläuterung einer ersten Ausführungsform einer erfindungsgemäßen Druckluftversorgungseinrichtung;
- Figur 2: ein Schaltungsdiagramm zur Erläuterung einer zweiten Ausführungsform einer erfindungsgemäßen Druckluftversorgungseinrichtung;
- Figur 3: ein Schaltungsdiagramm zur Erläuterung einer Ansteuerungsmöglichkeit eines bistabilen Magnetventils; und
- Figur 4: ein Diagramm zur Erläuterung der Erfindung im Zusammenhang mit sonstigen Fahrzeugkomponenten.

Bei der nachfolgenden Beschreibung der Zeichnungen bezeichnen gleiche Bezugszeichen gleiche oder vergleichbare Komponenten.

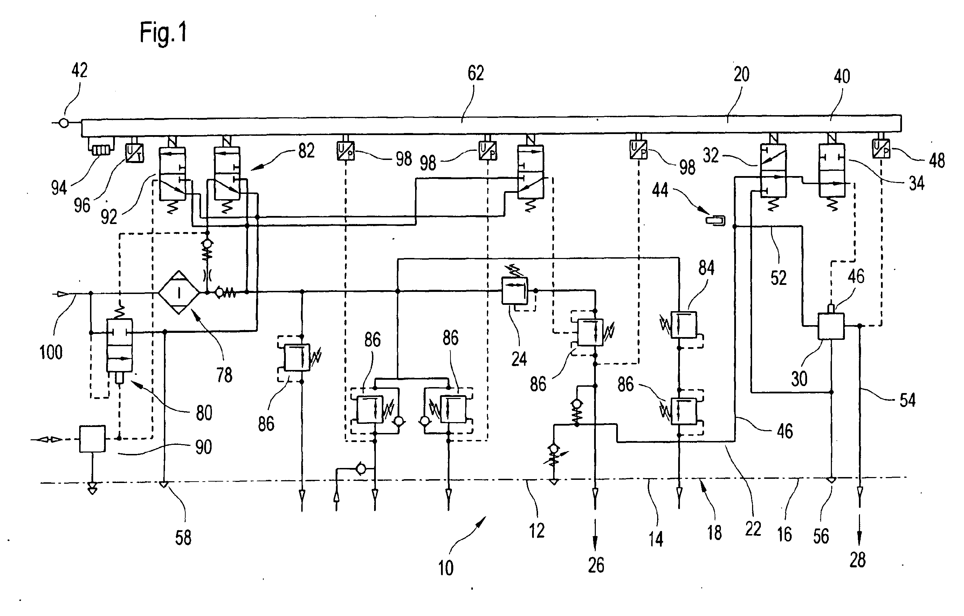

Figur 1 zeigt ein Schaltungsdiagramm zur Erläuterung einer ersten Ausführungsform einer erfindungsgemäßen Druckluft-, versorgungseinrichtung. Die Luftaufbereitungsanlage 12 umfasst als zentrale Komponenten eine Trocknereinheit 78, einen Druckregler 80, eine Regenerationseinheit 82, mehrere Druckbegrenzer 84 und mehrere Überströmventile 86, wobei zumindest eines der Überströmventile zusätzlich mit einem von einem Magnetventil 88 gelieferten Druck ansteuerbar ist. Es sind ferner eine Schnellentlüftung 90 mit zugehörigem Magnetventil 92, eine Heizung 94, ein Temperatursensor 96, mehrere Drucksensoren 98 sowie verschiedenen Zwecken zugeordnete Rückschlagventile vorgesehen. Die von einem Drucklufteingang 100 gelieferte Druckluft wird nach Verarbeitung in der Luftaufbereitungsanlage über die als Mehrkreisschutzventil arbeitenden Überströmventile 96 an die verschiedenen Verbraucherkreise weitergeleitet, wobei dies von der elektronischen Steuerung 62, die über einen Zentralstecker 42 mit Energie versorgt wird und Informationen austauscht, unter Verwendung der Sensorik gesteuert und überwacht wird. Bezüglich der weiteren Funktionsweise einer Luftaufbereitungsanlage wird beispielsweise auf die DE 103 42 978 A1 verwiesen, welche eine vergleichbare Symbolik verwendet.

An dem Gehäuse 14 der Luftaufbereitungsanlage 12 ist über eine Flanschverbindung 18 ein Feststellbremsanlagenmodul 16 angeordnet. Die Flanschverbindung 18 stellt eine elektrische Schnittstelle 20 und eine pneumatische Schnittstelle 22 zur Verfügung. Um sicherzustellen, dass eine korrekte und einfach herzustellende Verbindung zwischen dem Modul 16 und der Luftaufbereitungsanlage 12 hergestellt wird, sind Passstifte und zugehörige Führungen vorgesehen, wobei vorliegend nur eine solche Fixiereinrichtung 44 symbolisch dargestellt ist. Über die pneumatische Schnittstelle 62 wird dem Feststellbremsanlagenmodul 16 über die Leitung 46 Druckluft zugeführt, wobei diese Druckluft denselben Druckbegrenzer 24 durchströmt hat, wie auch die der Anhängerbremsanlage 26 zugeführte Druckluft. Die über die Leitung 46 zugeführte Druckluft dient sowohl zur Versorgung der Feststellbremsanlage 28 über die Leitung 52, das Relaisventil 30 und die weitere Leitung 54, als auch zu Steuerzwecken. In dem Zusammenhang sind zwei Magnetventile 32, 34, vorgesehen. Diese Magnetventile 32, 34 sind mit einer Steuerung 40 verbunden, die über die elektrische Schnittstelle 20 mit der Steuerung 62 der Luftaufbereitungsanlage 12 verbunden ist. Die Steuerung 40 kann sämtliche Steuerungsfunktionen der Feststellbremsanlage übernehmen. Ebenso ist es möglich, dass Steuerungsfunktionen der Feststellbremsanlage ganz oder teilweise durch die Steuerung 62 der Luftaufbereitungsanlage übernommen werden. In diesem Fall wäre eine Steuerung in dem Feststellbremsanlagemodul 16 entweder entbehrlich oder aus Redundanzgründen dennoch vorzusehen. Auch umgekehrt kann die Steuerung 40 des Feststellbremsanlagenmoduls 16 Steuerungsaufgaben übernehmen, die die Luftaufbereitungsanlage 12 betreffen. Eines der Magnetventile ist ein 3/2-Ventil 32, wobei dem 3/2-Ventil 32 ein 2/2-Halteventil 34 nachgeschaltet ist. Über diese beiden Ventile besteht eine Verbindung zu einem Steuereingang 46 des Relaisventils 30, so dass in Abhängigkeit des Steuerdrucks 46 Versorgungsdruck über die Leitungen 52 und 54 sowie das Relaisventil 30 der Feststellbremsanlage 28 zugeleitet werden kann. Der Druck am Ausgang des Relaisventils 30 kann durch einen Drucksensor 48 überwacht werden. Die Entlüftung des Feststellbremsanlagenmoduls 16 kann über eine eigene am Modul angeordnete Entlüftung 56 erfolgen. Ebenfalls ist es möglich, das Modul 16 über eine Zentralentlüftung der Luftaufbereitungsanlage 12 zu entlüften.

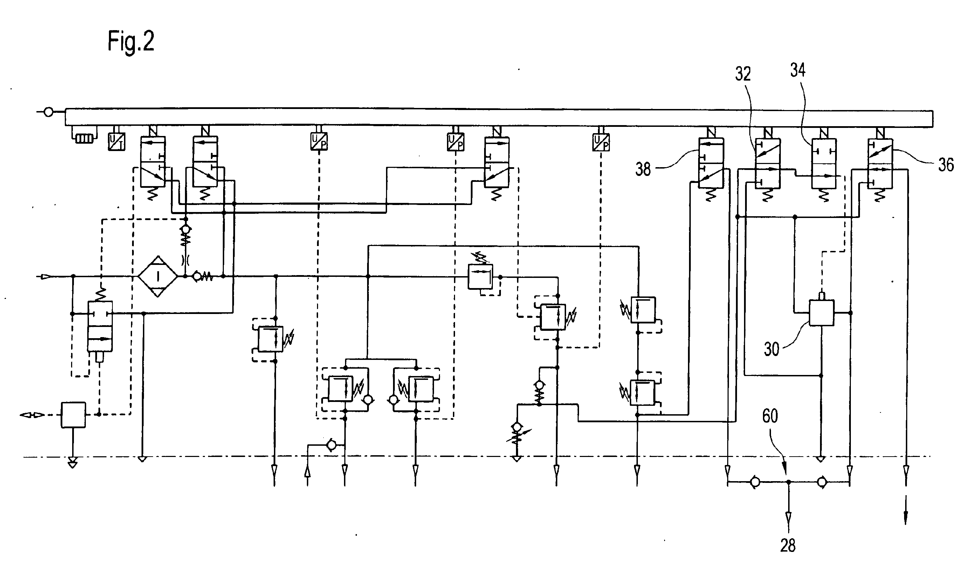

Figur 2 zeigt ein Schaltungsdiagramm zur Erläuterung einer zweiten Ausführungsform einer erfindungsgemäßen Druckluftversorgungseinrichtung. Zusätzlich zu Figur 2 sind hier im Feststellbremsanlagenmodul 16 zwei weitere 3/2-Magnetventile 36, 38 vorgesehen. Über das Magnetventil 36 kann ein Steuereingang eines Anhängersteuerventils 50 mit dem Ausgangsdruck des Relaisventils 30 angesteuert werden. Das Magnetventil 38 ist zentraler Bestandteil einer Notlöseeinrichtung. Auch wenn in dem Feststellbremsanlagenkreis, der über das Relaisventil 30 beliefert wird, ein Defekt vorliegt, kann durch Umschalten des Magnetventils 38 die Feststellbremsanlage 28 mit Druckluft versorgt werden. Um dies zu ermöglichen, erfolgt die Versorgung der Feststellbremsanlage 28 über ein Wechselventil 60, das je nach den anstehenden Druckverhältnissen entweder über das Magnetventil 38 zuströmende Druckluft oder vom Relaisventil 30 ausgegebene Druckluft zur Feststellbremsanlage 28 weiterleitet.

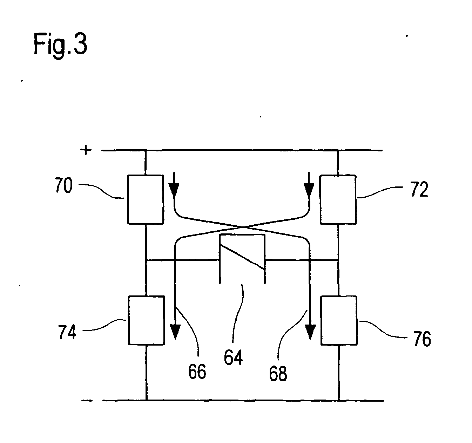

Figur 3 zeigt ein Schaltungsdiagramm zur Erläuterung einer Ansteuerungsmöglichkeit eines bistabilen Magnetventils. Dargestellt ist die Schaltung der Spule 64 des in den Figuren 1 und 2 mit Bezugszeichen 32 gekennzeichneten Magnetventils. Die Ansteuerung der Spule 64 erfolgt über eine Brückenschaltung, wobei die Bereitstellung verschiedener Stromrichtungen 66, 68 mittels Transistorstufen 70, 72, 74, 76 gesteuert wird. Von diesen Stromrichtungen 66, 68 hängt der Schaltzustand des Magnetventils 32 ab. Auf diese Weise gelingt es, sicherzustellen, dass sich bei Stromausfall die Stellung der Feststellbremse nicht ändert.

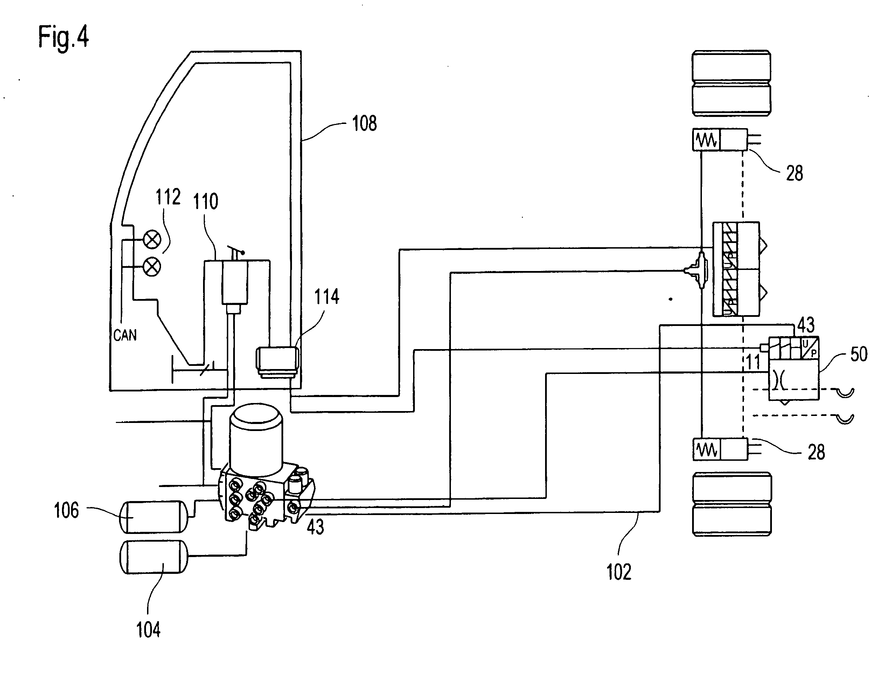

Figur 4 zeigt ein Diagramm zur Erläuterung der Erfindung im Zusammenhang mit sonstigen Fahrzeugkomponenten. Als eine Besonderheit ist hier zu verzeichnen, dass die Feststellbremsanlage 28 stufbar ist, wodurch die Betriebsbremse durch die Feststellbremsanlage unterstützt werden kann. Es ist ebenfalls das Anhängersteuermodul 50 dargestellt, welches über die Steuerleitung 102, das heißt insbesondere über das in Figur 2 dargestellte Magnetventil 36, ansteuerbar ist. Ansonsten sind Druckbehälter 104, 106 sowie eine Fahrerkabine 108 und darin angeordnete Komponenten, wie eine Handsteuereinheit 110, Signallampen und deren Anbindung an die Druckluftversorgungseinrichtung sowie ein EBS-Modul 114 dargestellt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Druckluftversorgungseinrichtung
- 12: Luftaufbereitungsanlage
- 14: Ventilgehäuse
- 16: Feststellbremsanlagenmodul
- 18: Flanschverbindung
- 20: elektrische Schnittstelle
- 22: pneumatische Schnittstelle
- 24: Druckbegrenzer
- 26: Anhängerdruckluftversorgung
- 28: Feststellbremsanlage
- 30: Relaisventil
- 32: bistabiles Magnetventil
- 34: Haltemagnetventil
- 36: 3/2-Ventil
- 38: 3/2-Ventil
- 40: Steuerung
- 42: Zentralstecker
- 44: Fixiereinrichtung
- 46: Steuereingang
- 48: Drucksensor
- 50: Anhängersteuermodul
- 52: Leitung
- 54: Leitung
- 56: Entlüftung
- 58: Entlüftung
- 60: Wechselventil
- 62: Steuerung
- 64: Spule
- 66: Stromrichtung
- 68: Stromrichtung
- 70: Transistorstufe
- 72: Transistorstufe
- 74: Transistorstufe
- 76: Transistorstufe
- 78: Trocknereinheit
- 80: Druckregler
- 82: Regenerationseinheit
- 84: Druckbegrenzer
- 86: Überströmventil
- 88: Magnetventil
- 90: Schnellentlüftung
- 92: Magnetventil
- 94: Heizung
- 96: Temperatursensor
- 98: Drucksensor
- 100: Drucklufteingang
- 102: Steuerleitung
- 104: Druckbehälter
- 106: Druckbehälter
- 108: Fahrerkabine
- 110: Handsteuereinheit
- 112: Signallampen
- 114: EBS-Modul

## Patentansprüche

1. Druckluftversorgungseinrichtung (10) mit einer elektronischen Luftaufbereitungsanlage (12), die ein Ventilgehäuse (14) aufweist, wobei in dem Ventilgehäuse ein Druckbegrenzer (24) angeordnet ist, der einen einer Anhängerdruckluftversorgung (26) und der Feststellbremsanlage (28) zugeführten Druck begrenzt, **dadurch gekennzeichnet, dass** an dem Ventilgehäuse (14) ein Feststellbremsanlagenmodul (16) zur Druckluftversorgung einer Feststellbremsanlage über eine Flanschverbindung (18) angeordnet ist, und dass die Flanschverbindung eine elektrische (20) und eine pneumatische (22) Schnittstelle zwischen der Luftaufbereitungsanlage und dem Feststellbremsanlagenmodul zur Verfügung stellt.

2. Druckluftversorgungseinrichtung (10) nach Anspruch 1, **dadurch gekennzeichnet, dass** in dem Feststellbremsanlagenmodul ein Relaisventil (30) angeordnet ist, über das der der Feststellbremsanlage (28) zugeführte Druck steuerbar ist.

3. Druckluftversorgungseinrichtung (10) nach Anspruch 1 oder 2, **dadurch gekennzeichnet, dass** der Steuereingang des Relaisventils (30) über ein bistabiles Magnetventil (32) ansteuerbar ist, welches bei einem Stromausfall in seiner Stellung verharrt.

4. Druckluftversorgungseinrichtung (10) nach Anspruch 3, **dadurch gekennzeichnet, dass** das bistabile Magnetventil (32) durch Stromrichtungsänderung in der Magnetspule umschaltet.

5. Druckluftversorgungseinrichtung (10) nach Anspruch 3 oder 4, **dadurch gekennzeichnet, dass** das bistabile Magnetventil (32) durch einen Stromimpuls in der Magnetspule umschaltet.

6. Druckluftversorgungseinrichtung (10) nach einem der Ansprüche 3 bis 5, **dadurch gekennzeichnet, dass** das bistabile Magnetventil (32) in Serie mit einem Haltemagnetventil (34) geschaltet ist.

7. Druckluftversorgungseinrichtung (10) nach einem der Ansprüche 2 bis 6, **dadurch gekennzeichnet, dass** einem Ausgang des Relaisventils (30) ein 3/2-Ventil (36) nachgeschaltet ist, über das ein Steuereingang eines Anhängersteuermoduls (50) ansteuerbar ist.

8. Druckluftversorgungseinrichtung (10) nach einem der vorhergehenden Ansprüche, **dadurch gekennzeichnet, dass** ein 3/2-Magnetventil (38) vorgesehen ist, dass nicht aus dem Feststellbremsanlagenkreis mit Druckluft versorgt wird und dass bei Bestromung eine Notlöseeinrichtung der Feststellbremsanlage betätigt.

9. Druckluftversorgungseinrichtung (10) nach einem der vorhergehenden Ansprüche, **dadurch gekennzeichnet, dass** in dem Ventilgehäuse (14) der Luftaufbereitungsanlage (12) eine elektronische Steuerung (62) vorgesehen ist die Steuerfunktionen für die Luftaufbereitungsanlage (12) und für das Feststellbremsanlagenmodul (16) wahrnimmt.

10. Druckluftversorgungseinrichtung (10) nach einem der vorhergehenden Ansprüche, **dadurch gekennzeichnet, dass** in dem Feststellbremsanlagenmodul (16) eine elektronische Steuerung (40) vorgesehen ist die Steuerfunktionen für das Feststellbremsanlagenmodul wahrnimmt.

11. Druckluftversorgungseinrichtung (10) nach einem der vorhergehenden Ansprüche, **dadurch gekennzeichnet, dass** in dem Feststellbremsanlagenmodul (16) eine elektronische Steuerung (40) vorgesehen ist, die Steuerfunktionen der elektronischen Steuerung für die Luftaufbereitungsanlage ergänzt und/oder ersetzt.

12. Druckluftversorgungseinrichtung (10) nach einem der vorhergehenden Ansprüche, **dadurch gekennzeichnet, dass** die Feststellbremsanlage (28) zur Unterstützung der Betriebsbremsfunktion gestuft ansteuerbar ist.

13. Druckluftversorgungseinrichtung (10) nach einem der vorhergehenden Ansprüche, **dadurch gekennzeichnet, dass** im Bereich der Flanschverbindung (18) mechanische Mittel vorgesehen sind, die.die Verbindung zwischen dem Ventilgehäuse der Luftaufbereitungsanlage (12) und dem Feststellbremsanlagenmodul (16) örtlich festlegen.

14. Druckluftversorgungseinrichtung (10) nach einem der vorhergehenden Ansprüche, **dadurch gekennzeichnet, dass** die Flanschverbindung (18) direkt zwischen dem Ventilgehäuse (14) und dem Feststellbremsanlagenmodul (16) vorliegt, das heißt insbesondere ohne Zwischenplatte.

## Claims

1. Compressed-air supply device including an electronic air-processing system (12) including a valve housing (14), with a pressure-limiting means (24) being disposed in said valve housing, which means limits a pressure supplied to a trailer compressed-air supply device (26) and to the parking brake system (28), **characterised in that** a parking-brake system module (16) for compressed-air supply to a parking-brake system is disposed on said valve housing (14) via a flange connection means (18), and that said flange connection means provides an electrical (20) and a pneumatic (22) interface available between said air-processing system and said parking-brake system module.

2. Compressed-air supply device (10) according to Claim 1, **characterised in that** a relay valve (30) is disposed in said parking-brake system module, via which the pressure supplied to said parking brake system (28) is controllable.

3. Compressed-air supply device (10) according to Claim 1 or 2, **characterised in that** the control input of said relay valve (30) is controllable via a bistable solenoid valve (32) which remains in its position in the case of power breakdown.

4. Compressed-air supply device (10) according to Claim 3, **characterised in that** said bistable solenoid valve (32) switches over in response to a change of the current flow direction in the solenoid coil.

5. Compressed-air supply device (10) according to Claim 3 or 4, **characterised in that** said bistable solenoid valve (32) changes over in response to a current pulse in said solenoid coil.

6. Compressed-air supply device (10) according to any of the Claims 3 to 5, **characterised in that** said bistable solenoid valve (32) is connected in series with a holding solenoid valve (34).

7. Compressed-air supply device (10) according to any of the Claims 2 to 6, **characterised in that** a 3/2-way valve (36) is connected to join the output of said relay valve (30), via which a control input of a trailer control module (50) is controllable.

8. Compressed-air supply device (10) according to any of the preceding Claims, **characterised in that** a 3/2-way solenoid valve (38) is provided which is not supplied with compressed air from the parking-brake system circuit and which operates an emergency release means of said parking-brake system when current flows through it.

9. Compressed-air supply device (10) according to any of the preceding Claims, **characterised in that** an electronic controller (62) is provided in the valve housing (14) of said air processing system (12), which performs the control functions for said air-processing system (12) and for said parking-brake system module (16).

10. Compressed-air supply device (10) according to any of the preceding Claims, **characterised in that** an electronic controller (40) is provided in said parking-brake system module, which performs the control functions for said parking-brake system module.

11. Compressed-air supply device (10) according to any of the preceding Claims, **characterised in that** an electronic controller (40) is provided in said parking-brake system module (16), which supplements and/or substitutes the control functions of said electronic controller for said air-processing system.

12. Compressed-air supply device (10) according to any of the preceding Claims, **characterised in that** said parking-brake system (28) is controllable in steps for supporting the service brake function.

13. Compressed-air supply device (10) according to any of the preceding, **characterised in that** mechanical means are provided in the zone of said flange connection means (18), which fixedly locate the connection between said valve housing or said air-processing system (12) and said parking-brake system module (16).

14. Compressed-air supply device (10) according to any of the preceding Claims, **characterised in that** said flange connection means (18) is present between said valve housing (14) and said parking-brake system module (16) directly, which means without an intermediate plate in particular.

## Revendications

1. Dispositif (10) d'alimentation en air comprimé comprenant une installation (12) électronique de préparation de l'air, qui a un corps (14) de vanne, dans lequel, dans le corps de vanne, est disposé un limiteur (24) de pression qui limite une pression envoyée à une alimentation (26) de remorque en air comprimé et à l'installation (28) de frein de stationnement, **caractérisé en ce que** sur le corps (14) de la vanne est monté par une liaison (18) par bride un module (16) d'installation de frein de stationnement pour l'alimentation en air comprimé d'une installation de frein de stationnement et **en ce que** la liaison par bride met à disposition une interface électrique (20) et une interface pneumatique (22) entre l'installation de préparation d'air et le module d'installation de frein de stationnement.

2. Dispositif (10) d'alimentation en air comprimé suivant la revendication 1, **caractérisé en ce que** dans le module d'installation de frein de stationnement est disposée une vanne (30) relais par laquelle la pression apportée à l'installation (18) de frein de stationnement peut être réglée.

3. Dispositif (10) d'alimentation en air comprimé suivant la revendication 1 ou 2, **caractérisé en ce que** l'entrée de commande de la vanne (30) de relais peut être commandée par une électrovanne (32) bistable qui reste en sa position lors d'une panne de courant.

4. Dispositif (10) d'alimentation en air comprimé suivant la revendication 3, **caractérisé en ce que** l'électrovanne (32) bistable commute par modification du sens de courant dans la bobine de l'électroaimant.

5. Dispositif (10) d'alimentation en air comprimé suivant la revendication 3 ou 4, **caractérisé en ce que** l'électrovanne (32) bistable commute par une impulsion de courant dans la bobine de l'électroaimant.

6. Dispositif (10) d'alimentation en air comprimé suivant l'une des revendications 3 à 5, **caractérisé en ce que** l'électrovanne (32) bistable est montée en série avec une électrovanne (34) de maintien.

7. Dispositif (10) d'alimentation en air comprimé suivant l'une des revendications 2 à 6, **caractérisé en ce qu'**en aval de la sortie de la vanne (30) relais est montée une vanne (36) 3/2 par laquelle une entrée de commande d'un module (50) de commande de remorque peut être commandée.

8. Dispositif (10) d'alimentation en air comprimé suivant l'une des revendications précédentes, **caractérisé en ce qu'**il est prévu une électrovanne (38) 3/2 qui n'est pas alimentée en air comprimé à partir du circuit d'installation de frein de stationnement et qui est actionnée lorsqu'un dispositif de serrage de secours de l'installation de frein de stationnement est alimenté en courant.

9. Dispositif (10) d'alimentation en air comprimé suivant l'une des revendications précédentes, **caractérisé en ce que,** dans le corps (14) de vanne de l'installation (12) de préparation de l'air, est prévue une commande (62) électronique qui perçoit les fonctions de commande pour l'installation (12) de préparation de l'air et pour le module (16) d'installation de frein de stationnement.

10. Dispositif (10) d'alimentation en air comprimé suivant l'une des revendications précédentes, **caractérisé en ce qu'**il est prévu, dans le module (16) d'installation de frein de stationnement, une commande (40) électronique qui perçoit les fonctions de commande pour le module (16) d'installation de frein de stationnement.

11. Dispositif (10) d'alimentation en air comprimé suivant l'une des revendications précédentes, **caractérisé en ce qu'**il est prévu, dans le module (16) d'installation de frein de stationnement, une commande (40) électronique qui complète et/ou remplace les fonctions de commande de la commande électronique pour l'installation de préparation de l'air.

12. Dispositif (10) d'alimentation en air comprimé suivant l'une des revendications précédentes, **caractérisé en ce que** l'installation (28) de frein de stationnement peut être commandée par palier pour assister la fonction de frein de service.

13. Dispositif (10) d'alimentation en air comprimé suivant l'une des revendications précédentes, **caractérisé en ce qu'**il est prévu, dans la région de la liaison (18) par bride, des moyens mécaniques qui fixent localement la liaison entre le boîtier de la vanne de l'installation (12) de préparation de l'air et le module (16) de l'installation de frein de stationnement.

14. Dispositif (10) d'alimentation en air comprimé suivant l'une des revendications précédentes, **caractérisé en ce que** la liaison (18) par bride est présente directement entre le corps (14) de la vanne et le module (16) de l'installation de frein de stationnement, c'est-à-dire notamment sans plaque intermédiaire.
